# EUROPEAN PATENT APPLICATION

(11) **EP 4 660 647 A1**
(43) Date of publication of application: **10.12.2025**
(21) Application number: 24749889.2
(22) Date of filing: 11.01.2024
(51) Int. Cl.: G01R 31/3842, B60L 3/00, B60L 50/60, B60L 58/10, G01R 31/50, G01R 31/392, H01M 10/42, H01M 10/48, H02J 7/00

(54) **BATTERY ANALYSIS SYSTEM, BATTERY ANALYSIS METHOD, BATTERY ANALYSIS PROGRAM, AND RECORDING MEDIUM CONTAINING BATTERY ANALYSIS PROGRAM**

(30) Priority: 30.01.2023 JP 2023011710
(71) Applicant: Panasonic Intellectual Property Management Co., Ltd., Kadoma-shi, Osaka 571-0057 (JP)
(72) Inventor: NAGASE, Ryosuke, Kadoma-shi, Osaka 571-0057 (JP)
(74) Representative: Novagraaf International SA
(86) International application number: PCT/JP2024/000406
(87) International publication number: WO 2024/161933

(57) **Abstract**

In a battery analysis system, a data reception unit receives battery data of a battery pack mounted on an apparatus via the apparatus or a data relay system. A battery data retention unit stores the battery data that have been received. A battery state analysis unit reads the battery data that has been stored, analyzes the battery data that has been read, and estimates a battery state for each predetermined analysis item. A data amount controller controls an amount of battery data to be stored in the battery data retention unit according to at least one analysis item selected by a user.

## Description

### TECHNICAL FIELD

The present disclosure relates to a battery analysis system, a battery analysis method, and a battery analysis program for analyzing a state of a battery.

### BACKGROUND ART

A battery analysis system that stores battery data of a battery pack mounted on an electrified vehicle in a cloud database, reads the stored battery data, and analyzes a state of the battery pack mounted on the electrified vehicle has been put into practical use. This type of battery analysis system receives battery data of a predetermined sampling cycle transmitted from a plurality of electrified vehicles, and stores the received battery data in a cloud database. The transmitted battery data is basically stored in a cloud database regardless of utilization of the data.

In recent years, there has been a demand for improvement in accuracy of an analysis function of a battery, and an amount of data required for analysis has increased. Accordingly, a situation in which the capacity of the cloud database is tight has become apparent. However, it is difficult to select battery data to be stored in consideration of the fact that which analysis function is desired is different for each customer, and there are customers who will add another analysis function later.

Regarding the selection of battery data, PTL 1 discloses a charge and discharge management device that determines a frequency of collecting data according to a state of a storage battery system to collect data items of the storage battery system while reducing a communication load between a charge and discharge instruction device and the storage battery system. Specifically, the data collection frequency is changed according to whether charging or discharging is being performed, whether a user is using the system, and the like. This method leads to a reduction in the amount of data to be accumulated in the cloud database as a result of reducing the communication load.

### Citation List

### Patent Literature

PTL 1: Unexamined Japanese Patent Publication No. 2014-103717

### SUMMARY OF THE INVENTION

However, in the application in which the analysis item can be freely selected for each customer like the analysis of an in-vehicle battery pack, when the battery data of all the customers is collected in a uniform pattern, the battery data necessary for each customer becomes excessive or insufficient.

The present disclosure has been made in view of such a circumstance, and an object of the present disclosure is to provide a technology for optimizing a storage amount of battery data regarded as a basis of analysis of a battery pack.

To solve the above-described problem, a battery analysis system includes a data reception unit configured to receive battery data of a battery pack mounted on an apparatus via the apparatus or a data relay system, a battery data retention unit configured to store the battery data that have been received, a battery state analysis unit configured to read the battery data that has been stored, analyze the battery data that has been read, and estimate a battery state, and a data amount controller configured to control an amount of battery data to be stored in the battery data retention unit according to at least one analysis item that has been selected.

Any combinations of configuration elements described above and expressions of the present disclosure that are converted in terms of devices, systems, methods, computer programs, recording media, and the like are also effective as aspects of the present disclosure.

The present disclosure can optimize a storage amount of battery data regarded as a basis of analysis of a battery pack.

### BRIEF DESCRIPTION OF THE DRAWINGS

Fig. 1 is a diagram for describing a battery analysis system according to an exemplary embodiment.
Fig. 2A is a diagram illustrating a configuration of an assembled battery system including a plurality of single cells connected in series.
Fig. 2B is a diagram illustrating a configuration of an assembled battery system including a plurality of cell blocks connected in series.
Fig. 3 is a graph extracting a part of analysis functions of a battery pack provided to a user by a battery analysis service provider.
Fig. 4 is a flowchart for describing Control Example 1 of the amount of battery data with the battery analysis system according to the exemplary embodiment.
Fig. 5 is a flowchart for describing Control Example 2 of the amount of battery data with the battery analysis system according to the exemplary embodiment.
Fig. 6 is a flowchart for describing Control Example 3 of the amount of battery data with the battery analysis system according to the exemplary embodiment.
Fig. 7 is a flowchart for describing Control Example 4 of the amount of battery data with the battery analysis system according to the exemplary embodiment.

### DESCRIPTION OF EMBODIMENT

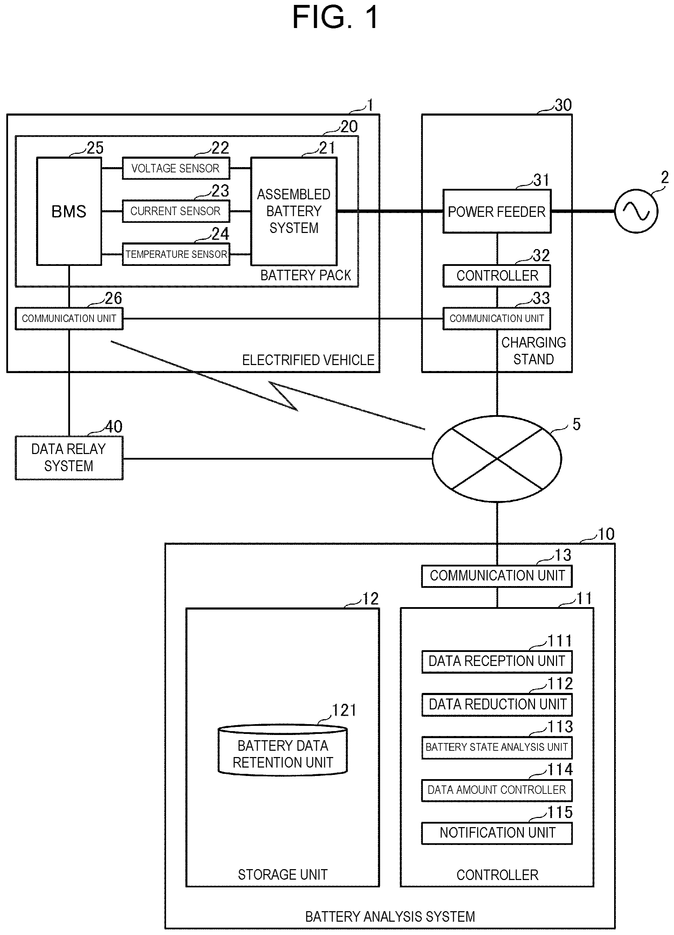

Fig. 1 is a diagram for describing battery analysis system 10 according to an exemplary embodiment. Battery analysis system 10 is a system for analyzing the state of battery pack 20 mounted on electrified vehicle 1. In the present exemplary embodiment, battery analysis system 10 is constructed on a cloud server installed in a data center managed by a cloud service provider. A battery analysis service provider that provides a service for analyzing battery pack 20 mounted on electrified vehicle 1 uses the cloud server by subscribing to the cloud service provider. Battery analysis system 10 may be constructed on an own server installed in an own facility or a data center of the battery analysis service provider.

Assembled battery system 21 included in battery pack 20 mounted on electrified vehicle 1 supplies power to a drive motor (not illustrated). Assembled battery system 21 includes a plurality of single cells connected in series or a plurality of cell blocks connected in series. In the case of battery pack 20 having a large number of series connections of the cells, assembled battery system 21 may be configured by connecting, in series, a plurality of battery modules including a plurality of single cells connected in series or a plurality of cell blocks connected in series.

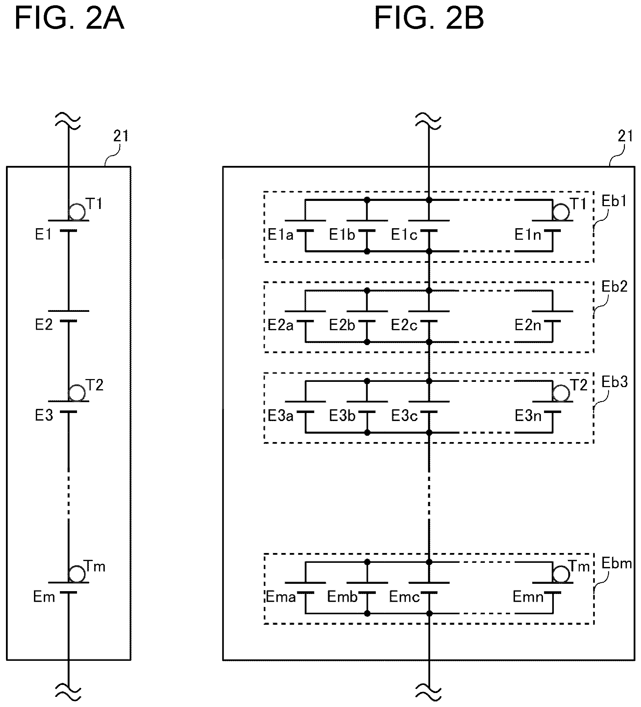

Fig. 2A is a diagram illustrating a configuration of assembled battery system 21 including a plurality of single cells E1 to Em connected in series. Fig. 2B is a diagram illustrating a configuration of assembled battery system 21 including a plurality of cell blocks Eb1 to Ebm connected in series. Cell blocks Eb1 to Ebm respectively include a plurality of cells E1a to E1n, to Ema to Emn, connected in parallel,.

Available examples of the cell include a lithium-ion battery cell, a nickel-metal-hydride battery cell, and a lead battery cell. Hereinafter, the present description assumes an example of use of lithium-ion battery cells (nominal voltage: 3.6 V to 3.7 V). The number of series connections of single cells or cell blocks is determined in accordance with voltage of the drive motor. For example, when the number of series connections is large, the system configuration illustrated in Fig. 2A or Fig. 2B is used as one unit of battery modules, and a plurality of battery modules are connected in series to configure assembled battery system 21.

Voltage sensor 22 detects the voltage across the plurality of single cells E1 to Em connected in series or cell blocks Eb1 to Ebm connected in series. The plurality of single cells E1 to Em connected in series or the plurality of cell blocks Eb1 to Ebm connected in series are connected to a shunt resistor in series. Current sensor 23 detects a current flowing through single cells E1 to Em connected in series or cell blocks Eb1 to Ebm connected in series based on a voltage across the shunt resistor. Instead of the shunt resistor, a Hall element may be used. Temperature sensor 24 is installed at a plurality of observation points in battery pack 20 including assembled battery system 21. For example, thermistors T1 to Tm are used as temperature sensors 24, and they are installed at a plurality of positions on the surface of assembled battery system 21 as illustrated in Fig. 2A or Fig. 2B.

Battery management system (BMS) 25 manages the state of assembled battery system 21. BMS 25 monitors, as monitoring data items of battery pack 20, the cell voltage of each of the plurality of single cells E1 to Em or the plurality of cell blocks Eb1 to Ebm measured by voltage sensor 22, the current flowing through battery pack 20 measured by current sensor 23, and the temperature measured by each of the plurality of temperature sensors 24 installed in battery pack 20.

BMS 25 acquires each cell voltage, the current, and each temperature being monitored at a predetermined sampling cycle (for example, 10 seconds, 30 seconds, or 1 minute), and stores the acquired voltages, currents, and temperatures in a nonvolatile memory (not illustrated). BMS 25 may store only the maximum cell voltage and the minimum cell voltage of each cell voltage to compresses the data storage amount. BMS 25 may store only the maximum temperature and the minimum temperature of each temperature at the plurality of observation points to compress the data storage amount.

BMS 25 estimates a state of charge (SOC) by combining an open circuit voltage (OCV) method and a current integration method. The OCV method is a method of estimating the SOC based on the OCV of a cell to be measured and the SOC-OCV curve of the cell. The SOC-OCV curve of the cell is created in advance based on a characteristic test performed by a battery manufacturer, and is registered in the BMS 25 at the time of shipment.

The current integration method is a method of estimating the SOC based on the OCV at the start of charging and discharging of a cell and an integrated value of a measured current. The current integration method causes a measurement error of the current to accumulate as charging and discharging time increases. Thus, it is preferable to use a weighted average of the SOC estimated by the current integration method and the SOC estimated by the OCV method.

BMS 25 converts the SOC of each of single cells E1 to Em or each of cell blocks Eb1 to Ebm into an actual capacity, combines the actual capacities to calculate the actual capacity of battery pack 20, and can estimate the SOC of battery pack 20 based on the actual capacity and the current full charge capacity of battery pack 20.

BMS 25 transmits battery data including each cell voltage or the maximum and minimum cell voltages, the current, each temperature or the maximum and minimum temperatures, and the SOC of battery pack 20 to an electronic control unit (ECU) (not illustrated) via an in-vehicle network. For example, a controller area network (CAN) or a local interconnect network (LIN) can be used as the in-vehicle network.

Communication unit 26 has a function of executing communication signal processing with communication unit 33 of charging stand 30, a function of executing communication signal processing with the communication unit of data relay system 40, and a function of executing wireless signal processing for connection to network 5. Communication unit 26 can access network 5 using a cellular phone network (cellular network), a wireless LAN, a vehicle to infrastructure (V2I), a vehicle to vehicle (V2V), an electronic toll collection system (ETC system), or dedicated short range communications (DSRC), for example.

Network 5 is a general term for communication paths such as the Internet, a dedicated line, and a virtual private network (VPN), and a communication medium and a protocol thereof are not limited. Available examples of the communication medium include a cellular phone network, a wireless LAN, a wired LAN, an optical fiber network, an ADSL network, and a CATV network. Available examples of the communication protocol include transmission control protocol (TCP)/internet protocol (IP), user datagram protocol (UDP)/IP, and Ethernet (registered trademark).

The ECU may be wirelessly connected to network 5 to transmit the battery data received from BMS 25 to battery analysis system 10 each time, or may accumulate the battery data in an internal nonvolatile memory (not illustrated) and collectively transmit the battery data accumulated in the nonvolatile memory to battery analysis system 10 at a predetermined timing. The ECU may collectively transmit the battery data accumulated in the nonvolatile memory to battery analysis system 10 via data relay system 40 or charging stand 30.

For example, when electrified vehicle 1 is a delivery vehicle for business use, data relay system 40 includes a server and a terminal device (for example, PC) operated and managed by a delivery company that owns the delivery vehicle. When the terminal device installed at an office of the delivery company and electrified vehicle 1 are connected by cable or wirelessly, the ECU of electrified vehicle 1 can transmit the battery data to the terminal device of the delivery company. The terminal device of the delivery company transmits the battery data acquired from a plurality of electrified vehicles 1 managed by the office to the server of the delivery company. The server of the delivery company collectively transmits the battery data of the plurality of electrified vehicles 1 collected from each office to battery analysis system 10 via network 5. The battery data may be directly transmitted from the terminal device of each office to battery analysis system 10 via network 5.

When charging stand 30 is connected to network 5, the ECU of electrified vehicle 1 can collectively transmit the battery data accumulated in the nonvolatile memory to battery analysis system 10 via charging stand 30 connected to network 5 by connecting electrified vehicle 1 and charging stand 30 with a charging cable.

In a state where electrified vehicle 1 and charging stand 30 are connected by a charging cable, charging stand 30 can charge battery pack 20 of electrified vehicle 1 with the power supplied from commercial power system 2. In general, AC is used for normal charge, and DC is used for rapid charge. For charging with AC (for example, single-phase 100/200V), a charging voltage or a charging current is controlled by a charger (not illustrated) in electrified vehicle 1. For charging with DC, power feeder 31 of charging stand 30 controls a charging voltage or a charging current. Power feeder 31 includes a rectifier circuit, a filter, and a DC/DC converter to generate DC power by rectifying AC power supplied from commercial power system 2 by full-wave rectification with the rectifier circuit and smoothing the AC power with the filter. The DC/DC converter controls a voltage or a current of the generated DC power.

Available examples of rapid charge standards include CHAdeMO (registered trademark), ChaoJi, GB/T, and combined charging system (Combo). CHAdeMO, ChaoJi, and GB/T each adopts a CAN as a communication system. Combo adopts power line communication (PLC) as a communication system.

The charging cable using the CAN system includes a communication line in addition to a power line. When electrified vehicle 1 and charging stand 30 are connected by the charging cable, the ECU of electrified vehicle 1 establishes a communication channel with controller 32 of charging stand 30. The charging cable using the PLC system transmits a communication signal while superimposing the signal on the power line.

Communication unit 33 of charging stand 30 has a function of executing communication signal processing with communication unit 26 of electrified vehicle 1 and a function of executing signal processing for connection to network 5. Communication unit 33 can access network 5 using a wired LAN, a wireless LAN, or a cellular phone network, for example.

Battery analysis system 10 includes controller 11, storage unit 12, and communication unit 13. Communication unit 13 is a communication interface (for example, NIC: Network Interface Card) for connection to network 5 in a wired or wireless manner.

Controller 11 includes data reception unit 111, data reduction unit 112, battery state analysis unit 113, data amount controller 114, and notification unit 115. Functions of controller 11 can be achieved by cooperation of a hardware resource and a software resource, or by a hardware resource alone. Available examples of the hardware resource include a CPU, a ROM, a RAM, a graphics processing unit (GPU), an application specific integrated circuit (ASIC), a field programmable gate array (FPGA), and other LSI circuits. Available examples of the software resource include a program, such as an operating system or an application.

Storage unit 12 includes a nonvolatile recording medium such as an HDD or an SSD, and stores various kinds of data. Storage unit 12 includes battery data retention unit 121. Data reception unit 111 receives the battery data of battery pack 20 mounted on electrified vehicle 1 directly from electrified vehicle 1 or via data relay system 40 or charging stand 30. Data reception unit 111 stores the received battery data in battery data retention unit 121. In this example, the program is recorded in advance in the memory of controller 11. Alternatively, the program may be provided via a telecommunication line such as the Internet or by being recorded in a (non-transitory) recording medium such as a memory card.

When data amount controller 114 determines to reduce the amount of battery data to be stored in battery data retention unit 121, data reduction unit 112 can reduce the received battery data. Details of the reduction method will be described later.

Battery state analysis unit 113 reads the battery data stored in battery data retention unit 121 at a predetermined analysis timing, and analyzes the read battery data to estimate the battery state. In the present exemplary embodiment, the battery analysis service provider provides a customer (hereinafter, referred to as user as appropriate) with various analysis functions (for example, state of health (SOH) analysis, cell balancing proposal, voltage abnormality determination, temperature abnormality determination, initial abnormality determination, internal short circuit detection, and sensor abnormality determination) of battery pack 20. The user selects a desired analysis item. Basically, a charge is added as the number of analysis items to be selected increases. Notification unit 115 notifies the user's terminal device of the analysis result via network 5. For example, when the user is the above-described delivery company, notification unit 115 notifies the server or the terminal device of data relay system 40 of the analysis result.

Data amount controller 114 controls the amount of battery data to be stored in battery data retention unit 121 according to at least one analysis item selected by the user. For example, data amount controller 114 determines the transmission frequency of the battery data according to at least one selected analysis item. For example, the decrease in SOH progresses slowly, and a steep change does not occur. Thus, in battery pack 20 of the user who selects only the SOH analysis, the battery data of 10 second sampling cycle is unnecessary, and the analysis accuracy can be secured even with battery data of 1 minute sampling cycle, for example. Cell balancing does not need to be executed frequently either, and battery data with 10 second sampling cycle is unnecessary. On the other hand, for an analysis item for which an abnormality needs to be detected at an early stage, such as temperature abnormality determination, the sampling cycle is desirably as short as possible.

When the selected analysis item is only the SOH analysis or the cell balancing analysis, data amount controller 114 sets the transmission frequency of the battery data to be lower than usual. Notification unit 115 notifies electrified vehicle 1 or data relay system 40 of the transmission frequency of the battery data determined by data amount controller 114.

Upon receiving the transmission frequency of the battery data from battery analysis system 10, the ECU of electrified vehicle 1 transmits a sampling frequency corresponding to the transmission frequency of the battery data to BMS 25. Upon receiving the sampling frequency from the ECU, BMS 25 samples each cell voltage, the current, and each temperature of battery pack 20 monitored at the received sampling frequency. The ECU may transmit the battery data received from BMS 25 to battery analysis system 10 at a transmission frequency designated by battery analysis system 10 without transmitting the sampling frequency to BMS 25.

When receiving the transmission frequency of the battery data from battery analysis system 10, data relay system 40 transmits the battery data received from electrified vehicle 1 to battery analysis system 10 at the transmission frequency designated by battery analysis system 10.

Data reduction unit 112 can decimate the battery data received from electrified vehicle 1 or data relay system 40 at the battery data decimation rate (corresponding to the transmission frequency of the battery data) determined by data amount controller 114.

When the cycle of the battery data to be stored is lengthened to reduce the amount of battery data to be stored in battery data retention unit 121, any one of (1) lowering the sampling frequency of the battery data in BMS 25, (2) lowering the transmission frequency of the battery data to be transmitted from the ECU to battery analysis system 10, (2)' lowering the transmission frequency of the battery data to be transmitted from data relay system 40 to battery analysis system 10, and (3) decimating the battery data in data reduction unit 112 is executed.

For example, data amount controller 114 determines an unimportant data item of the battery data according to at least one selected analysis item. For example, for the battery temperature abnormality determination, the current, the maximum and minimum cell voltages, each cell voltage, the maximum and minimum temperatures, and the SOC are used, but the maximum and minimum temperatures and the SOC are not required for detecting a first battery internal short circuit.

For example, when the selected analysis item is only the detection of the first battery internal short circuit, data amount controller 114 designates the maximum and minimum temperatures and the SOC as the unimportant data items of the battery data. Notification unit 115 notifies electrified vehicle 1 or data relay system 40 of the unimportant data item of the battery data determined by data amount controller 114.

Upon receiving the unimportant data item of the battery data from battery analysis system 10, the ECU of electrified vehicle 1 transmits the received unimportant data item of the battery data to BMS 25. Upon receiving the unimportant data item from the ECU, BMS 25 stops sampling the received unimportant data item or lowers the sampling cycle of the received unimportant data item below the sampling frequency of other data items. The ECU may stop the transmission of the unimportant data item of the battery data to be transmitted to battery analysis system 10 without notifying BMS 25 of the unimportant data item, or the ECU may lower the transmission frequency of the unimportant data item below the transmission frequency of other data items. The sampling frequency or the transmission frequency of the unimportant data item is preferably changed to the sampling frequency or the transmission frequency at the minimum level at which the analysis can be performed even when an analysis item for which the data of the unimportant data item is necessary is selected at a later date.

When receiving the unimportant data item of the battery data from battery analysis system 10, data relay system 40 stops the transmission of the unimportant data item of the battery data to be transmitted to battery analysis system 10, or lower the transmission frequency of the unimportant data item below the transmission frequency of other data items.

Data reduction unit 112 can delete or decimate the data of the unimportant data item determined by data amount controller 114 from the battery data received from electrified vehicle 1 or data relay system 40.

When the amount of data of the unimportant data item of the battery data to be stored is reduced to reduce the amount of battery data to be stored in battery data retention unit 121, any one of (1) stopping sampling of the unimportant data item or reducing the sampling frequency of the unimportant data item in BMS 25, (2) not transmitting data of the unimportant data item from the ECU to battery analysis system 10 or reducing the transmission frequency of the unimportant data item, (2)' not transmitting data of the unimportant data item from data relay system 40 to battery analysis system 10 or reducing the transmission frequency of the unimportant data item, and (3) deleting data of the unimportant data item or decimating data of the unimportant data item in data reduction unit 112 is executed.

Data amount controller 114 can determine the transmission frequency of the battery data for each section according to the charge or discharge state of battery pack 20 according to at least one analysis item selected by the user. For example, internal short circuit detection, which is one of analysis items, is likely to occur during constant voltage (CV) charging. Thus, battery data during discharging is basically not used. In addition, the importance of battery data during constant current (CC) charging is also low. For example, the battery data at the time of constant voltage charging preferably has a sampling cycle of 10 seconds, but the battery data at the time of constant voltage charging may have a sampling cycle of 1 minute. Whether battery pack 20 is charging, discharging, or resting can be determined by the polarity of the current data.

For example, when the selected analysis item is only the internal short circuit detection, data amount controller 114 sets the transmission frequency in the discharging section and the constant current charging section of the battery data to be lower than usual. Notification unit 115 notifies electrified vehicle 1 or data relay system 40 of the transmission frequency of the battery data for each section determined by data amount controller 114.

Upon receiving the transmission frequency of the battery data for each section from battery analysis system 10, the ECU of electrified vehicle 1 transmits the sampling frequency for each section corresponding to the transmission frequency for each section to BMS 25. BMS 25 monitors the charge or discharge state of battery pack 20, and samples each monitored cell voltage, the current, and each temperature at the sampling frequency for each section received from the ECU. The ECU may monitor the charge or discharge state of battery pack 20 without transmitting the sampling frequency to BMS 25, and change the transmission frequency of the battery data received from BMS 25 for each section according to the charge or discharge state.

When receiving the transmission frequency of the battery data for each section from battery analysis system 10, data relay system 40 estimates the charge or discharge state of battery pack 20 based on the battery data received from electrified vehicle 1, and changes the transmission frequency of the battery data received from electrified vehicle 1 for each section according to the charge or discharge state.

Data reduction unit 112 estimates the charge or discharge state of battery pack 20 based on the battery data received from electrified vehicle 1 or data relay system 40. Data reduction unit 112 can decimate the battery data of the unimportant section received from electrified vehicle 1 or data relay system 40 at the battery data decimation rate for each section (corresponding to the transmission frequency for each section of the battery data) determined by data amount controller 114.

When the cycle of the unimportant section of the battery data to be stored is lengthened to reduce the amount of battery data to be stored in battery data retention unit 121, any one of (1) lowering the sampling frequency of the unimportant section of the battery data in BMS 25, (2) lowering the transmission frequency of the battery data of the unimportant section to be transmitted from the ECU to battery analysis system 10, (2)' lowering the transmission frequency of the battery data of the unimportant section to be transmitted from data relay system 40 to battery analysis system 10, and (3) decimating the battery data of the unimportant section in data reduction unit 112 is executed.

For example, when the free capacity of battery data retention unit 121 becomes smaller than a predetermined value, data amount controller 114 determines to reduce the transmission frequency of the battery data. Notification unit 115 notifies electrified vehicle 1 or data relay system 40 of the transmission frequency of the battery data determined by data amount controller 114. The subsequent processing is similar to the processing in the case of changing the transmission frequency of the battery data according to the analysis item described above. The battery data of battery pack 20 of which the transmission frequency of the battery data has already been lowered according to the analysis item is excluded from the target.

As described above, any one of (1) lowering the sampling frequency of the battery data in BMS 25, (2) lowering the transmission frequency of the battery data to be transmitted from the ECU to battery analysis system 10, (2)' lowering the transmission frequency of the battery data to be transmitted from data relay system 40 to battery analysis system 10, and (3) decimating the battery data in data reduction unit 112 is executed.

Data reduction unit 112 can reduce the battery data that has been already stored in battery data retention unit 121 when data amount controller 114 determines to reduce the amount of battery data stored in battery data retention unit 121 because of the free capacity of battery data retention unit 121 decreased to be smaller than the predetermined value.

For example, data reduction unit 112 can reduce the amount of battery data stored in battery data retention unit 121 by deleting or decimating the data of the unimportant data item of at least one analysis item selected by the user. When reducing the battery data that has been already stored in battery data retention unit 121, data reduction unit 112 reads the battery data from battery data retention unit 121, deletes or decimates the data of the unimportant data item, and then overwrites and stores the battery data after the data reduction in battery data retention unit 121.

When the free capacity of battery data retention unit 121 becomes smaller than the predetermined value, data amount controller 114 may determine the decimation rate of the battery data for each section according to the charge or discharge state of battery pack 20 according to at least one analysis item selected by the user. Data reduction unit 112 decimates the battery data according to the decimation rate for each section determined by data amount controller 114.

When data amount controller 114 determines to reduce the amount of battery data stored in battery data retention unit 121, data reduction unit 112 may preferentially decimate data items (for example, voltage, SOC) having a relatively small change included in the battery data. Data reduction unit 112 may decimate only data items having a relatively small change, or may decimate data items having a relatively small change more frequently than data items having a relatively large change (for example, current, temperature). The current may fluctuate intensely during traveling of electrified vehicle 1, and for example, the polarity may be reversed by a regenerative brake. Thus, it is highly necessary to store data of the current at a high sampling frequency. On the other hand, since the change in the voltage and the SOC is gentle, it is less necessary to store the data of the voltage and the SOC at a high sampling frequency.

When data amount controller 114 determines to reduce the amount of battery data stored in battery data retention unit 121, data reduction unit 112 may preferentially decimate battery data having a relatively small data loss. When the battery data having a large number of data loss is further decimated, the analysis accuracy may be greatly deteriorated, and thus it is desirable not to decimate the battery data having a large number of data loss as much as possible.

When the free capacity of battery data retention unit 121 is recovered to a value more than or equal to a value obtained by adding a margin to the predetermined value, data amount controller 114 returns the transmission frequency or the decimation rate of the battery data to the original value.

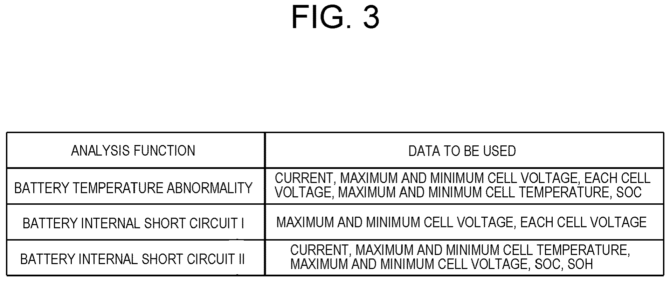

Fig. 3 is a graph extracting a part of analysis functions of battery pack 20 provided to the user by the battery analysis service provider. In the determination of the battery temperature abnormality, the current, the maximum and minimum cell voltages, each cell voltage, the maximum and minimum temperatures, and the SOC are used. As the maximum and minimum cell voltages, the maximum value and the minimum value of each cell voltage may be used, or both of each cell voltage and the maximum and minimum cell voltages may be received from BMS 25. The battery temperature abnormality can be predicted as follows, for example. At the time of charging, battery state analysis unit 113 calculates a determination score for detecting a sign of ignition based on the current, temperature, and elapsed time of each single cell or cell block. The determination score is calculated based on heat energy theory.

The self-heating value due to the charging current is defined by Q (I, R, T).

### Q: heating value [J], I: current [A], R: internal resistance [Ω], T: elapsed time

Self-heating value Q due to the charging current increases as current I increases, as internal resistance R increases, or as elapsed time T increases.

Internal resistance R of the battery depends on the SOC, the temperature, and the SOH. Internal resistance R increases as the SOC increases, as the temperature decreases, or as the SOH decreases.

The heating value of the battery is defined by Q (m, c, ΔTp).

Q: heating value [J], m: mass of battery [g], c: specific heat of entire battery [J/(g·K)], ΔTp: temperature rising in period T [°C] Here, m and c can be collectively considered as heat capacity C: [J/K].

Heating value Q of the battery increases as heat capacity C increases or as temperature ΔTp increasing at elapsed time T increases.

When the self-heating value Q due to the charging current falls within a value less than or equal to heating value Q of the battery, thermal runaway due to self-heating can be prevented. However, the battery data basically does not include the material, mass, and internal resistance of each cell.

Battery state analysis unit 113 calculates a determination score indicating the relationship between the amount of current flowing through each single cell or cell block in a certain period and the temperature rise of each single cell or cell block in the certain period. This specific example assumes that the maximum temperature is used as the temperature of each single cell or cell block, but when each temperature of a plurality of observation points is received as battery data, the temperature of the observation point most adjacent to each single cell or cell block may be used as the temperature of each single cell or cell block.

The determination score is calculated from current I, internal short circuit R, temperature Tp, and elapsed time T without using the heat capacity of each single cell or cell block. For example, the determination score may be defined by a ratio between the self-heating value and the temperature rise in a certain period. Internal resistance R of each single cell or cell block can be calculated by dividing each cell voltage by the current. The determination of the battery temperature abnormality may be performed for all the single cells or the cell blocks, or may be performed only for a single cell or a cell block having the maximum cell voltage. In this case, each cell voltage can be omitted from the data to be used.

The determination score can also be calculated from current I, temperature Tp, and elapsed time T without using the internal resistance or the heat capacity of each single cell or cell block. For example, the determination score may be defined by a ratio between the current integration amount and the temperature rise in a certain period. In this example, when the temperature rise is large for the charging current, the determination score is high when the current integration amount is used as a reference, and the determination score is low when the temperature rise is used as a reference. In this case, the maximum and minimum cell voltages and each cell voltage can be omitted from the data to be used. Battery state analysis unit 113 compares the calculated determination score with a threshold determined based on the data of an ignited battery to predict the occurrence of abnormality in each single cell or cell block.

For detection of the first battery internal short circuit, the maximum and minimum cell voltages and each cell voltage are used. In the detection of the first battery internal short circuit, the internal short circuit can be calculated as follows, for example. Battery state analysis unit 113 generates a smoothing voltage of each cell voltage in time series. For example, battery state analysis unit 113 may generate a smoothing voltage of each cell voltage using a primary low-pass filter, or may calculate a moving average of each cell voltage in a certain period to generate a smoothing voltage of each cell voltage.

Battery state analysis unit 113 calculates a representative value of the smoothing voltages of the remaining single cells or cell blocks excluding the smoothing voltage of the target single cell or cell block from the smoothing voltages of the plurality of single cells or cell blocks included in battery pack 20. For example, a median value, an average value, and a mode value of smoothing voltages of the remaining single cells or cell blocks are calculated as representative values. Battery state analysis unit 113 calculates a difference between the smoothing voltage of the target single cell or cell block and a representative value of the smoothing voltages of the remaining single cells or cell blocks. When the difference increases by a set value or more in a predetermined period, battery state analysis unit 113 determines that the target single cell or cell block is internally short circuited (more specifically, micro-short circuited). For example, when the difference increases by 5 mV or more in 12 hours, it is determined that an internal short circuit has occurred.

For detection of a second battery internal short circuit, current, the maximum and minimum cell voltages, each cell voltage, SOC, and SOH are used. In the detection of the second battery internal short circuit, the internal short circuit can be calculated as follows, for example. When a predetermined determination period (for example, 10 minutes) has elapsed, battery state analysis unit 113 calculates an average voltage of (m - 2) cells excluding the maximum voltage and the minimum voltage from the cell voltages of m cells included in battery pack 20. Battery state analysis unit 113 calculates a voltage difference between the calculated average voltage and the cell voltage of the target single cell or cell block.

Battery state analysis unit 113 further calculates differential voltage ΔV between the voltage difference currently calculated and a voltage difference that has been calculated for a period of time Δt (for example, one hour) before. Battery state analysis unit 113 compares calculated differential voltage ΔV with a determination threshold. When calculated differential voltage ΔV is more than equal to the determination threshold, battery state analysis unit 113 determines that an internal short circuit (more specifically, a micro-short circuit) has occurred in the target single cell or cell block.

In the detection of the second battery internal short circuit, a linear function (primary straight line) is introduced in which the SOC based on the initial capacity is an input variable, the OCV is an output variable, and the slope is positive. Battery state analysis unit 113 refers to the SOC-OCV curve corresponding to the SOH of each single cell or cell block to estimate the SOC based on the initial capacity corresponding to the measured voltage of each single cell or cell block. When battery pack 20 is being charged or discharged at the time of measuring the voltage of the single cell or the cell block, the measurement voltage is not OCV but a closed circuit voltage (CCV).

As a simple method, there is a method of passing the CCV through a noise reduction filter to treat the CCV after noise removal as OCV. As a stricter method, there is a method of correcting the CCV based on the current and internal resistance to estimate the OCV. In such a method, the accuracy can be further improved by correcting the internal resistance according to the temperature, the SOC, and the SOH. Battery state analysis unit 113 derives an alternative OCV by applying the initial capacity-based SOC corresponding to the measured voltage of each single cell or cell block to the linear function. Battery state analysis unit 113 calculates the normalized voltage difference based on the alternative OCV. Diagnosis with higher accuracy is possible in the detection of the second battery internal short circuit than in the detection of the first battery internal short circuit.

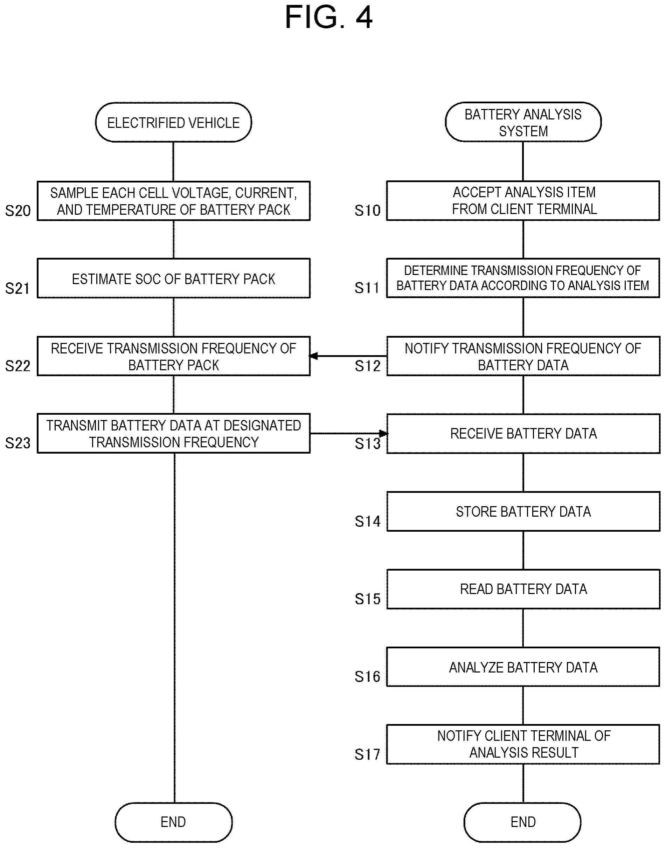

Fig. 4 is a flowchart for describing Control Example 1 of the amount of battery data with battery analysis system 10 according to the exemplary embodiment. BMS 25 of battery pack 20 mounted on electrified vehicle 1 samples each cell voltage measured by voltage sensor 22, the current flowing through battery pack 20 measured by current sensor 23, and each temperature measured by the plurality of temperature sensors 24 installed at the plurality of observation points in battery pack 20 at a predetermined sampling frequency (S20). BMS 25 estimates the SOC of battery pack 20 based on each cell temperature and current (S21).

Battery analysis system 10 accepts the analysis item from the terminal device of a client who requests the battery analysis service provider to analyze the state of battery pack 20 (S10). Data amount controller 114 of battery analysis system 10 determines the transmission frequency of the battery data according to the received analysis item (S11). Notification unit 115 notifies electrified vehicle 1 of the transmission frequency of the battery data determined by data amount controller 114 (S12).

The ECU of electrified vehicle 1 receives the transmission frequency of the battery data from battery analysis system 10 (S22). The ECU transmits the battery data (each cell voltage, the current, each temperature, SOC) received from BMS 25 to battery analysis system 10 at a designated transmission frequency (S23). The sampling frequency of the battery data in BMS 25 may be changed to a sampling frequency corresponding to the designated transmission frequency. Also in this case, the transmission frequency of the battery data transmitted from the ECU to battery analysis system 10 is the designated transmission frequency.

Data reception unit 111 of battery analysis system 10 receives the battery data from electrified vehicle 1 (S13). Data reception unit 111 stores the received battery data in battery data retention unit 121 (S14). Battery state analysis unit 113 reads the battery data from battery data retention unit 121 at a predetermined analysis timing (S15). Battery state analysis unit 113 executes the analysis item accepted from the client (S16). Notification unit 115 transmits the analysis result to the terminal device of the client (S17).

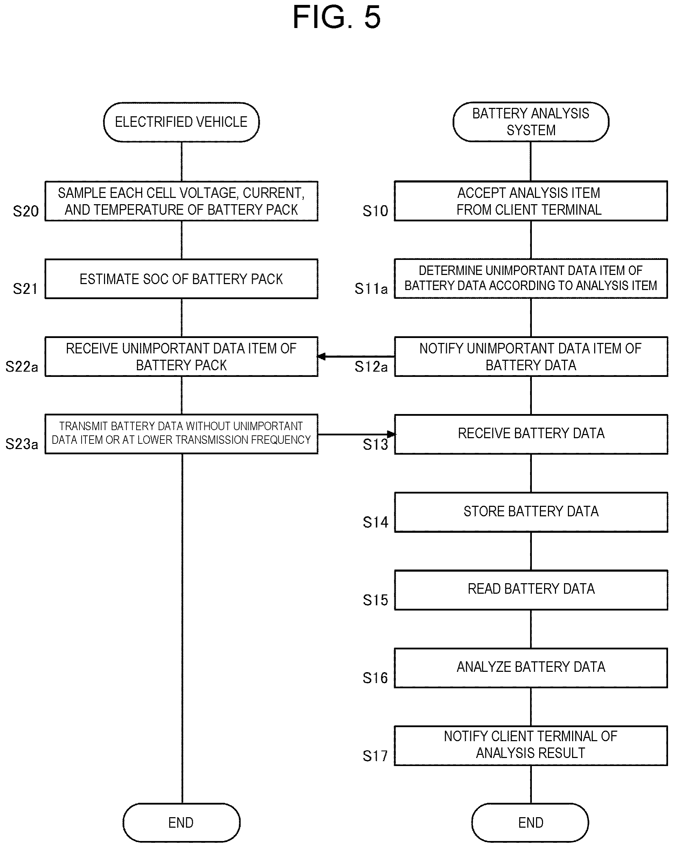

Fig. 5 is a flowchart for describing Control Example 2 of the amount of battery data with battery analysis system 10 according to the exemplary embodiment. Description of the same processing as that in the flowchart illustrated in Fig. 4 will be omitted. Data amount controller 114 of battery analysis system 10 determines the unimportant data item of the battery data according to the analysis item accepted from the terminal device of the client (S11a). Notification unit 115 notifies electrified vehicle 1 of the unimportant data item of the battery data determined by data amount controller 114 (S12a).

The ECU of electrified vehicle 1 receives the unimportant data item of the battery data from battery analysis system 10 (S22a). The ECU transmits the battery data received from BMS 25 to battery analysis system 10 by excluding the unimportant data item or reducing the transmission frequency of the unimportant data item from the battery data (each cell voltage, the current, each temperature, SOC) received from BMS 25 (S23a). When the battery data is sampled by BMS 25, the sampling of the unimportant data item may be stopped or the sampling frequency of the unimportant data item may be lowered. Also in this case, the battery data transmitted from the ECU to battery analysis system 10 is similar.

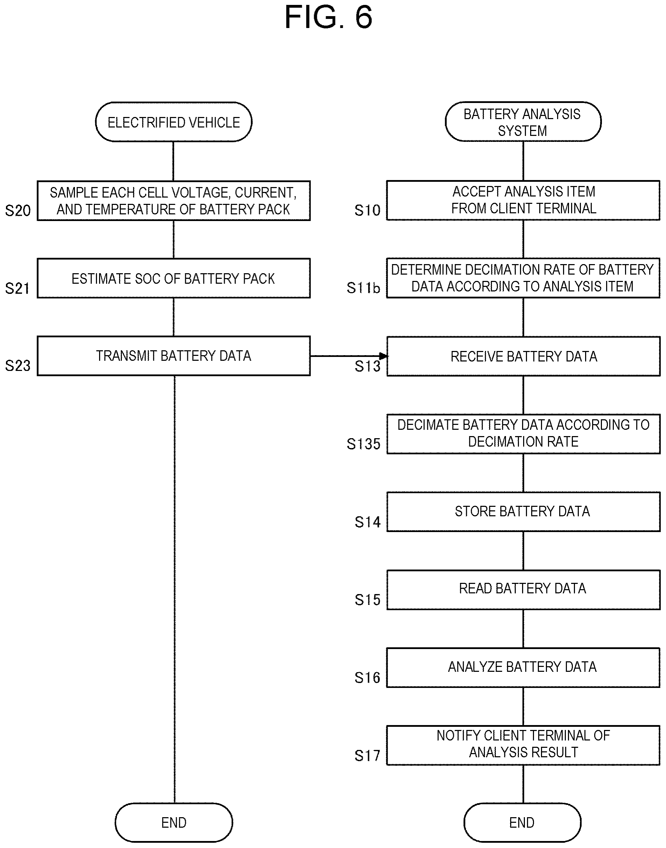

Fig. 6 is a flowchart for describing Control Example 3 of the amount of battery data with battery analysis system 10 according to the exemplary embodiment. Description of the same processing as that in the flowchart illustrated in Fig. 4 will be omitted. Data amount controller 114 of battery analysis system 10 determines the decimation rate of the battery data according to the analysis item accepted from the terminal device of the client (S11b). The determined decimation rate is not notified to electrified vehicle 1. Data reduction unit 112 decimates the battery data received from electrified vehicle 1 according to the determined decimation rate (S135).

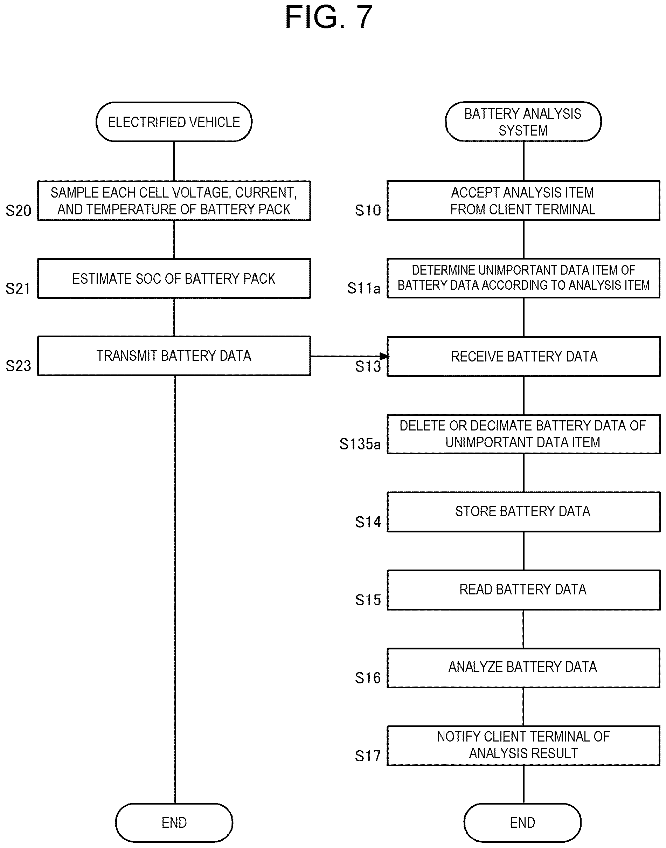

Fig. 7 is a flowchart for describing Control Example 4 of the amount of battery data with battery analysis system 10 according to the exemplary embodiment. Description of the same processing as that in the flowchart illustrated in Fig. 4 will be omitted. Data amount controller 114 of battery analysis system 10 determines the unimportant data item of the battery data according to the analysis item accepted from the terminal device of the client (S11a). In Control Example 4, the unimportant data item is not notified to electrified vehicle 1. Data reduction unit 112 deletes or decimates the battery data of the determined unimportant data item (S135a).

As described above, according to the present exemplary embodiment, the storage amount of battery data regarded as the basis of the analysis of battery pack 20 can be optimized. In general, the usage fee of the cloud database is metered, and when the usage capacity of the cloud database increases, the fee to be paid to the cloud service provider increases. In such a case, the profit of the battery analysis service provider deteriorates, or the fee needs to be passed on to the customer. When the fee is passed on to the customer, the number of customers may decrease.

As a countermeasure, it is conceivable to reduce the storage amount of battery data by reducing the collection frequency of the battery data. In such a case, if the collection frequency of the battery data is uniformly lowered, both the data to be used for the analysis of battery pack 20 and the data not used are uniformly reduced, and thus it is difficult to say that it is an optimal reduction method.

In the present exemplary embodiment, necessary data is selected according to the analysis function selected by the user, and collection of unnecessary data is stopped, or the sampling frequency of unnecessary data is reduced. In the latter case, even when the user adds an analysis function afterwards, the added analysis function can be supported. When the collection frequency of data necessary for the added analysis function has been lowered, the collection frequency is returned to a normal collection frequency after the addition.

In addition, the storage amount of the battery data can be reduced by setting the data necessary for the analysis to have the optimum sampling frequency necessary for the analysis. The optimum sampling frequency required for the analysis varies for each analysis item. In the case of an analysis item for which a low sampling frequency is sufficient, the data amount can be deleted by lowering the sampling frequency.

In addition, by decreasing the sampling frequency when the free capacity of battery data retention unit 121 on the cloud is small and increasing the sampling frequency when the free capacity is large, the analysis accuracy of battery pack 20 can be ensured while suppressing an increase in the storage amount of the battery data.

In addition, when the amount of battery data to be transmitted to battery analysis system 10 is reduced on electrified vehicle 1 side, the communication load can be reduced. When the battery data is transmitted using the cellular phone network, the communication charge is reduced.

The present disclosure has been described above based on the exemplary embodiment. It is to be understood by the person of ordinary skill in the art that the exemplary embodiment is merely an example, that various modifications can be made by combining each component and each processing process of the exemplary embodiment, and that such modifications are also within the scope of the present disclosure.

In the exemplary embodiment described above, a four-wheeled electric vehicle is assumed as electrified vehicle 1. In this regard, an electric motorcycle (electric scooter), an electric bicycle, or an electric kick scooter may be used. Examples of the electric vehicle include not only full-standard electric vehicles but also low-speed electric vehicles such as golf carts and land cars. In these cases, a smartphone may be used as data relay system 40.

The apparatus on which battery pack 20 is mounted is not limited to electrified vehicle 1. Examples of the apparatus on which battery pack 20 is mounted include an electric ship, a railway vehicle, an electric mobile body such as a multicopter (drone), a stationary power storage system, and a consumer electronic device (notebook PC, smartphone, or the like).

The exemplary embodiment may be defined by the following items.

### [Item 1]

Battery analysis system (10) including:
data reception unit (111) configured to receive battery data of battery pack (20) mounted on apparatus (1) via apparatus (1) or data relay system (40);
battery data retention unit (121) configured to store the battery data that have been received;
battery state analysis unit (113) configured to read the battery data that has been stored, analyzes the battery data that has been read, and estimates a battery state; and
data amount controller (114) configured to control an amount of battery data to be stored in battery data retention unit (121) according to at least one analysis item that has been selected.

According to this, the storage amount of the battery data regarded as the basis of the analysis of battery pack (20) can be optimized.

### [Item 2]

Battery analysis system (10) according to Item 1,
the system further including notification unit (115) configured to notify apparatus (1) or data relay system (40) of a predetermined instruction,
wherein data amount controller (114) determines a transmission frequency of the battery data according to the at least one analysis item that has been selected, and
notification unit (115) notifies apparatus (1) or data relay system (40) of the transmission frequency of the battery data that has been determined.

According to this, the storage amount of the battery data can be optimized by changing the transmission frequency of the battery data to be transmitted from apparatus (1) or data relay system (40).

### [Item 3]

Battery analysis system (10) according to Item 2, wherein
data amount controller (114) determines the transmission frequency of the battery data for each section according to a charge or discharge state of battery pack (20) according to the at least one analysis item that has been selected, and
notification unit (115) notifies apparatus (1) or data relay system (40) of the transmission frequency of the battery data for each section that has been determined.

According to this, the storage amount of the battery data and the storage content can be further optimized by changing the transmission frequency of the battery data for each section to be transmitted from apparatus (1) or data relay system (40).

### [Item 4]

Battery analysis system (10) according to Item 1,
the system further including notification unit (115) configured to notify apparatus (1) or data relay system (40) of a predetermined instruction,
wherein battery pack (20) includes a plurality of single cells (E1 to Em) connected in series or a plurality of cell blocks (Eb1 to Ebm) connected in series, the plurality of cell blocks each including a plurality of single cells (E1a to E1n, to Ema to Emn),
battery management system (25) of apparatus (1) acquires, at a predetermined sampling cycle, as a monitoring data item of battery pack (20), each cell voltage of the plurality of single cells (E1 to Em) or the plurality of cell blocks (Eb1 to Ebm), a current flowing through battery pack (20), and each temperature measured by at least one temperature sensor (24) installed in battery pack (20),
data amount controller (114) determines an unimportant data item of the battery data according to the at least one analysis item that has been selected, and
notification unit (115) notifies apparatus (1) or data relay system (40) of the unimportant data item of the battery data that has been determined.

According to this, the storage amount of the battery data and the storage content can be optimized by changing the data amount of the unimportant data item of the battery data to be transmitted from apparatus (1) or data relay system (40).

### [Item 5]

Battery analysis system (10) according to Item 1,
the system further including notification unit (115) configured to notify apparatus (1) or data relay system (40) of a predetermined instruction,
wherein data amount controller (114) determines to reduce the transmission frequency of the battery data when a free capacity of battery data retention unit (121) becomes smaller than a predetermined value, and
notification unit (115) notifies apparatus (1) or data relay system (40) of the transmission frequency of the battery data that has been determined.

According to this, the free capacity of battery data retention unit (121) can be adjusted by changing the transmission frequency of the battery data to be transmitted from apparatus (1) or data relay system (40).

### [Item 6]

Battery analysis system (10) according to Item 1,
the system further including data reduction unit (112) configured to reduce the battery data to be received when data amount controller (114) determines to reduce the amount of battery data to be stored in battery data retention unit (121).

According to this, the storage amount of the battery data can be optimized by reducing the battery data to be stored.

### [Item 7]

Battery analysis system (10) according to Item 6, wherein
data reduction unit (112) reduces the battery data that has been already stored in battery data retention unit (121) when data amount controller (114) determines to reduce the amount of battery data to be stored in battery data retention unit (121) because of a free capacity of battery data retention unit (121) decreased to be less than a predetermined value.

According to this, the free capacity of battery data retention unit (121) can be increased by reducing the battery data that has been already stored.

### [Item 8]

Battery analysis system (10) according to Item 6 or 7, wherein
data reduction unit (112) deletes or decimates data of the unimportant data item of the at least one analysis item that has been selected.

According to this, the storage amount of the battery data and the storage content can be optimized by limiting the target to be reduced or decimated to the data of the unimportant data item.

### [Item 9]

Battery analysis system (10) according to Item 6 or 7, wherein
data amount controller (114) determines a decimation rate of the battery data for each section according to a charge or discharge state of battery pack (20) according to the at least one analysis item that has been selected, and
data reduction unit (112) decimates the battery data according to the decimation rate determined for each section.

According to this, the storage amount of the battery data and the storage content can be optimized by changing the decimation rate for each section according to the charge or discharge state.

### [Item 10]

Battery analysis system (10) according to Item 6 or 7, wherein data reduction unit (112) preferentially decimates data items having a relatively small change included in the battery data.

According to this, the storage amount of the battery data and the storage content can be optimized by preferentially decimating data items having a relatively small change.

### [Item 11]

A battery analysis method including:
a step of receiving battery data of battery pack (20) mounted on apparatus (1) via apparatus (1) or data relay system (40);
a step of storing the battery data that has been received in battery data retention unit (121);
a step of reading the battery data that has been stored and analyzing the battery data that has been read to estimate a battery state; and
a step of controlling an amount of battery data to be stored in battery data retention unit (121) according to at least one analysis item the has been selected.

According to this, the storage amount of the battery data regarded as the basis of the analysis of battery pack (20) can be optimized.

### [Item 12]

A battery analysis program that causes a computer to execute:
processing of receiving battery data of battery pack (20) mounted on apparatus (1) via apparatus (1) or data relay system (40);
processing of storing the battery data that has been received in battery data retention unit (121);
processing of reading the battery data that has been stored and analyzing the battery data that has been read to estimate a battery state; and
processing of controlling an amount of battery data to be stored in battery data retention unit (121) according to at least one analysis item the has been selected.

According to this, the storage amount of the battery data regarded as the basis of the analysis of battery pack (20) can be optimized.

### REFERENCE MARKS IN THE DRAWINGS

- 1: electrified vehicle
- 2: commercial power system
- 5: network
- 10: battery analysis system
- 11: controller
- 12: storage unit
- 13: communication unit
- 20: battery pack
- 21: assembled battery system
- 22: voltage sensor
- 23: current sensor
- 24: temperature sensor
- 25: BMS
- 26: communication unit
- 30: charging stand
- 31: power feeder
- 32: controller
- 33: communication unit
- 40: data relay system
- 111: data reception unit
- 112: data reduction unit
- 113: battery state analysis unit
- 114: data amount controller
- 115: notification unit
- 121: battery data retention unit

## Claims

1. A battery analysis system comprising:
a data reception unit configured to receive battery data of a battery pack mounted on an apparatus via the apparatus or a data relay system;
a battery data retention unit configured to store the battery data that have been received;
a battery state analysis unit configured to read the battery data that has been stored, analyze the battery data that has been read, and estimate a battery state for each predetermined analysis item; and
a data amount controller configured to control an amount of battery data to be stored in the battery data retention unit according to at least one analysis item selected by a user.

2. The battery analysis system according to Claim 1,
the system further comprising a notification unit configured to notify the apparatus or the data relay system of a predetermined instruction,
wherein the data amount controller determines a transmission frequency of the battery data according to the at least one analysis item that has been selected, and
the notification unit notifies the apparatus or the data relay system of the transmission frequency of the battery data that has been determined.

3. The battery analysis system according to Claim 2, wherein
the data amount controller determines the transmission frequency of the battery data for each section according to a charge or discharge state of the battery pack according to the at least one analysis item that has been selected, and
the notification unit notifies the apparatus or the data relay system of the transmission frequency of the battery data for each section that has been determined.

4. The battery analysis system according to Claim 1,
the system further comprising a notification unit configured to notify the apparatus or the data relay system of a predetermined instruction,
wherein the battery pack includes a plurality of single cells connected in series or a plurality of cell blocks connected in series, the plurality of cell blocks each including a plurality of single cells,
a battery management system of the apparatus acquires, at a predetermined sampling cycle, as a monitoring data item of the battery pack, each cell voltage of the plurality of single cells or the plurality of cell blocks, a current flowing through the battery pack, and each temperature measured by at least one temperature sensor installed in the battery pack,
the data amount controller determines an unimportant data item of the battery data according to the at least one analysis item that has been selected, and
the notification unit notifies the apparatus or the data relay system of the unimportant data item of the battery data that has been determined.

5. The battery analysis system according to Claim 1,
the system further comprising a notification unit configured to notify the apparatus or the data relay system of a predetermined instruction,
wherein the data amount controller determines to reduce the transmission frequency of the battery data when a free capacity of the battery data retention unit becomes smaller than a predetermined value, and
the notification unit notifies the apparatus or the data relay system of the transmission frequency of the battery data that has been determined.

6. The battery analysis system according to Claim 1, the system further comprising a data reduction unit configured to reduce the battery data to be received when the data amount controller determines to reduce the amount of battery data to be stored in the battery data retention unit.

7. The battery analysis system according to Claim 6, wherein the data reduction unit reduces the battery data that has been already stored in the battery data retention unit when the data amount controller determines to reduce the amount of battery data to be stored in the battery data retention unit because of a free capacity of the battery data retention unit decreased to be less than a predetermined value.

8. The battery analysis system according to Claim 6 or 7, wherein
the data amount controller determines an unimportant data item of the battery data according to the at least one analysis item that has been selected, and
the data reduction unit deletes or decimates data of the unimportant data item of the at least one analysis item that has been selected.

9. The battery analysis system according to Claim 6 or 7, wherein
the data amount controller determines a decimation rate of the battery data for each section according to a charge or discharge state of the battery pack according to the at least one analysis item that has been selected, and
the data reduction unit decimates the battery data according to the decimation rate determined for each section.

10. The battery analysis system according to Claim 6 or 7, wherein the data reduction unit preferentially decimates data items having a relatively small change included in the battery data.

11. A battery analysis method comprising:
receiving battery data of a battery pack mounted on an apparatus via the apparatus or a data relay system;
storing the battery data that has been received in a battery data retention unit;
reading the battery data that has been stored and analyzing the battery data that has been read to estimate a battery state; and
controlling an amount of battery data to be stored in the battery data retention unit according to at least one analysis item selected by a user.

12. A battery analysis program that causes a computer to execute:
processing of receiving battery data of a battery pack mounted on an apparatus via the apparatus or a data relay system;
processing of storing the battery data that has been received in a battery data retention unit;
processing of reading the battery data that has been stored and analyzing the battery data that has been read to estimate a battery state; and
processing of controlling an amount of battery data to be stored in the battery data retention unit according to at least one analysis item selected by a user.

13. A non-transitory recording medium containing the battery analysis program according to Claim 12.
